# EUROPEAN PATENT APPLICATION

(11) **EP 4 556 204 A1**
(43) Date of publication of application: **21.05.2025**
(21) Application number: 23882706.7
(22) Date of filing: 26.10.2023
(51) Int. Cl.: B29C 65/48, B32B 3/08, B32B 27/04, B32B 27/12, B29L 9/00

(54) **BONDING METHOD AND BONDING STRUCTURE**

(30) Priority: 28.10.2022 JP 2022173595
(71) Applicant: Mitsubishi Heavy Industries, Ltd., Tokyo 100-8332 (JP)
(72) Inventor: TAKAGI, Kiyoka, Tokyo 100-8332 (JP); ARAI, Keiji, Tokyo 100-8332 (JP); KATSUMATA, Shingo, Tokyo 100-8332 (JP); HASEGAWA, Koichi, Tokyo 100-8332 (JP)
(74) Representative: Hoffmann Eitle
(86) International application number: PCT/JP2023/038620
(87) International publication number: WO 2024/090502

(57) **Abstract**

Provided is a bonding method for bonding adherends to each other via an adhesive. The adherends and the adhesive contain a thermosetting resin. The method includes a step for molding the adherends, a step for positioning the adhesive between the adherends, and a step for curing the adhesive, bonding the adherends to each other, and forming a bonding structure. In the step for molding the adherends, a reinforcing member having higher rigidity than the adherends is positioned and integrally molded on the surfaces of the adherends on which the adhesive will be positioned.

## Description

### Technical Field

The present disclosure relates to a bonding method and a bonding structure.

### Background Art

In the related art, a method of manufacturing a composite material is known, in which a material for an article to be molded is primarily cured, the primarily cured material for the article to be molded is assembled with another material for an article to be molded through an adhesive agent to form an assembly, the assembly is heated to secondarily cure and integrate the material for the article to be molded (for example, refer to PTL 1).

### Citation List

### Patent Literature

[PTL 1] Japanese Unexamined Patent Application Publication No. 2014-136418

### Summary of Invention

### Technical Problem

By the way, a strength of a bonding structure in which composite materials are bonded to each other with an adhesive agent is lower than that of a composite material which is integrally molded (integrally molded structure). Therefore, an application range of the bonding structure is limited to the integrally molded structure, and it is desired to improve the strength of the bonding structure.

Therefore, an object of the present disclosure is to provide a bonding method and a bonding structure capable of improving the strength of a bonded portion. Solution to Problem

**In** a bonding method for bonding adherends to each other through an adhesive agent of the present disclosure, the adherends and the adhesive agent include a thermosetting resin, the method includes a step of molding the adherends, a step of disposing the adhesive agent between the adherends, and a step of forming a bonding structure by curing the adhesive agent and bonding the adherends to each other, in which, in the step of molding the adherends, a reinforcing member having a toughness higher than a toughness of the adherends is disposed on and integrally molded with a surface of the adherends on a side on which the adhesive agent is disposed.

**In** another bonding method for bonding adherends to each other through an adhesive agent of the present disclosure, the adherends and the adhesive agent include a thermosetting resin, the method includes a step of molding the adherends so that the thermosetting resin included in the adherends is in a semi-cured state, a step of disposing the adhesive agent between the adherends, and a step of forming the bonding structure by fully curing the thermosetting resin included in the adherends and the adhesive agent and bonding the adherends to each other.

A bonding structure of the present disclosure includes a pair of adherends which are provided to face each other, an adhesive agent which is provided between the adherends and bonds the pair of adherends, and a reinforcing member which is provided on a surface of the adherends on a side on which the adhesive agent is disposed, and is a material having a higher toughness than a toughness of the adherends.

### Advantageous Effects of Invention

According to the present disclosure, it is possible to improve a strength of a bonded portion.

### Brief Description of Drawings

Fig. 1 is a cross-sectional view schematically showing an example of a bonding structure according to Embodiment 1.
Fig. 2 is a cross-sectional view schematically showing an example of a bonding structure according to Embodiment 1.
Fig. 3 is an explanatory view showing a bonding method according to Embodiment 1.
Fig. 4 is a cross-sectional view schematically showing a bonding structure according to Embodiment 2.

### Description of Embodiments

Hereinafter, an embodiment according to the present disclosure will be described in detail with reference to the drawings. It should be noted that the present disclosure is not limited to this embodiment. Further, components of the following embodiments include components that can be easily substituted by those skilled in the art or components that are substantially the same as the components of the following embodiments. Further, the components described below can be combined as appropriate, and in a case where a plurality of embodiments are present, the embodiments can be combined.

### [Embodiment 1]

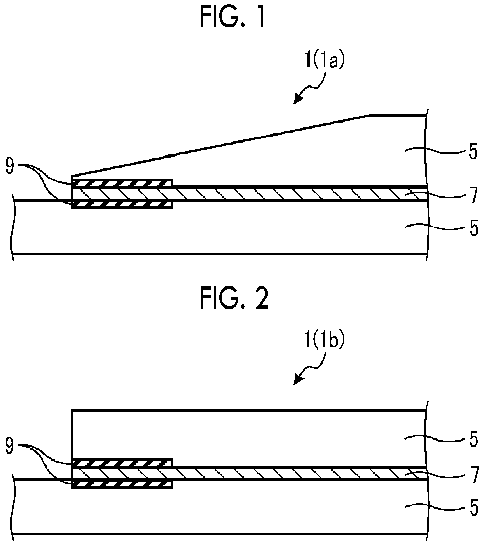

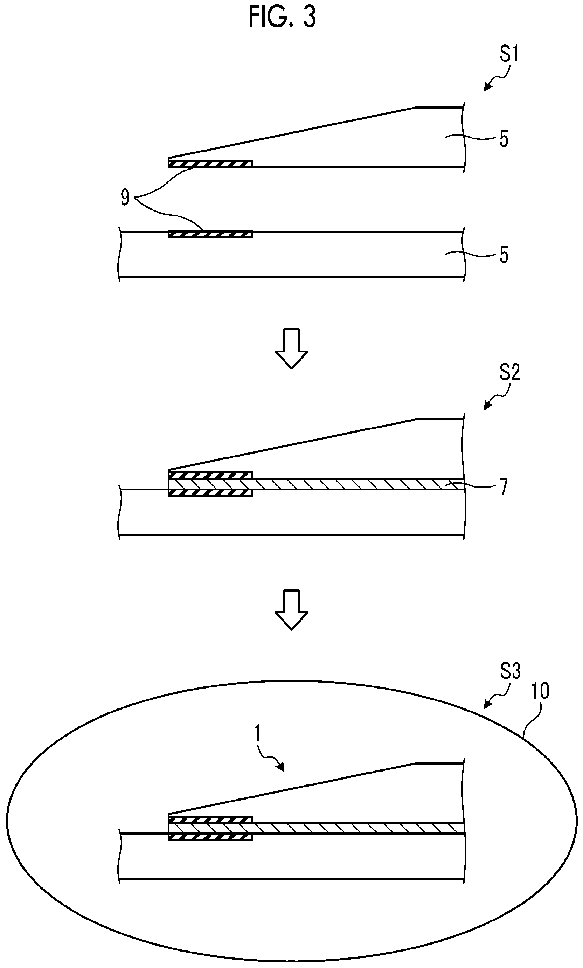

Figs. 1 and 2 are cross-sectional views schematically showing an example of a bonding structure according to Embodiment 1. Fig. 3 is an explanatory view showing a bonding method according to Embodiment 1.

In a bonding method and a bonding structure 1 according to Embodiment 1, composite materials 5 as adherends are bonded through an adhesive agent. In the bonding structure 1, a stress concentration portion in which a stress is concentrated at a predetermined portion is generated by applying a stress. In the bonding structure 1, the composite materials 5 are bonded to each other so as to have a strength that can withstand the generated stress concentration portion.

### (Bonding structure)

The bonding structure 1 includes a pair of composite materials 5 provided to face each other, an adhesive agent 7 which bonds the pair of composite materials 5, and a reinforcing member 9 provided at a stress concentration portion. In addition, examples of the bonding structure 1 include a bonding structure 1a shown in Fig. 1 and a bonding structure 1b shown in Fig. 2.

The pair of composite materials 5 includes a thermosetting resin and a reinforced fiber. The thermosetting resin is an epoxy-based resin. The thermosetting resin may be any resin as long as it undergoes a crosslinking reaction. The reinforced fiber is a carbon fiber, but is not particularly limited, and may be any fiber. That is, carbon fiber reinforced plastics are used as the composite materials 5, but any composite material may be used as long as a crosslinking reaction occurs. The pair of composite materials 5 is, for example, a skin and a stringer, and the bonding structure 1 is a structure in which the stringer is bonded to an inner side of the skin. In the pair of composite materials 5, surfaces facing each other are surfaces to be bonded, and the pair of surfaces to be bonded are parallel to each other. Here, in the bonding structure 1a shown in Fig. 1, one composite material 5 (an upper side in Fig. 1) of the pair of composite materials 5 has a tapered shape having a thickness decreasing toward an outer side. In addition, in the bonding structure 1b shown in Fig. 2, one composite material 5 (an upper side in Fig. 2) of the pair of composite materials 5 has a flat plate shape having the same thickness toward an outer side.

The adhesive agent 7 includes a thermosetting resin. The thermosetting resin is an epoxy-based resin as in the composite material 5, but may be any resin as long as it undergoes a crosslinking reaction. The adhesive agent 7 may be an adhesive agent formed in a film form which is heat-cured, or may be an adhesive agent in a gel form which is applied and heat-cured. The adhesive agent 7 has a uniform thickness over the surfaces to be bonded.

The reinforcing member 9 is provided on a surface of the composite material 5 on a side on which the adhesive agent 7 is disposed, that is, on the surface to be bonded. In addition, the reinforcing member 9 is provided at a portion where the stress concentration portion is generated. The portion where the stress concentration occurs can be predicted by analysis or the like, and a size of a crack that occurs in the stress concentrated portion can also be predicted by analysis or the like. The obtained crack has a critical crack length from a starting point to an end point of the crack. Since the starting point of the crack is an edge portion (an exposed portion) of the bonded portion, the reinforcing member 9 is provided from the edge portion of the bonded portion over the critical crack length. The reinforcing member 9 is a material having a higher toughness than that of the composite material 5. The reinforcing member 9 is, for example, a carbon fiber woven fabric or Vectran (registered trademark), and a reinforced fiber preform in a dry state or a composite material including a thermosetting resin and a reinforced fiber is used.

In addition, the reinforcing member 9 is provided integrally with the composite material 5, and is molded so that a surface of the reinforcing member 9 on a side on which the adhesive agent 7 is disposed, that is, a surface to be bonded of the reinforcing member 9 is flush with the surface to be bonded of the composite material 5. Therefore, the adhesive agent 7 has a uniform thickness over the surfaces to be bonded of the reinforcing member 9 and the composite material 5.

A surface roughness of the surface to be bonded of the reinforcing member 9 may be higher than that of the surface to be bonded of the composite material 5 during bonding.

### (Bonding method)

Next, a bonding method for bonding the composite materials 5 to each other using the adhesive agent 7 will be described with reference to Fig. 3. Fig. 3 is an explanatory view showing a bonding method according to Embodiment 1. Here, molecular weights of the thermosetting resin included in the composite material 5 and the thermosetting resin included in the adhesive agent 7 are different from each other. Specifically, the thermosetting resin included in the composite material 5 has a larger molecular weight than that of the thermosetting resin included in the adhesive agent 7. **In** other words, the thermosetting resin included in the adhesive agent 7 has a smaller molecular weight than that of the thermosetting resin included in the composite material 5. This is because a rigidity of the composite material 5 is high, while a viscosity of the adhesive agent 7 is decreased to increase infiltration.

As shown in Fig. 3, in the bonding method, first, each of the pair of composite materials 5 to be bonded is molded (a step S1). **In** the step S1, the composite material 5 before curing is formed by laminating a reinforced fiber sheet such as a prepreg obtained by impregnating the reinforced fiber with the thermosetting resin. After that, the reinforcing member 9 is disposed on the surface to be bonded of the composite material 5, which is a portion where the stress concentration portion is generated. In this case, the reinforcing member 9 is disposed from a predicted starting point of the crack in the bonding structure 1 to the critical crack length of the crack. In the step S1, the composite material 5 and the reinforcing member 9 are heated to be integrally molded such that the thermosetting resin of the composite material 5 is in a semi-cured state. In the step S1, a crosslinking degree (a curing degree) of the thermosetting resin is set in a range of 40% to 80% as the semi-cured state. In a case where the crosslinking degree of the thermosetting resin is set to 40% or more, the composite material 5 in the semi-cured state can be cured to the extent that the composite material 5 can be easily handled, and thus the handling or positioning of the composite material 5 are easily performed, and an assembly work is facilitated. In addition, in a case where the crosslinking degree of the thermosetting resin is more than 80%, a covalent bond generated at a bonding interface is reduced, and the strength at the interface is reduced. Therefore, the crosslinking degree of the thermosetting resin is set to 80% or less. In the step S1, in order to bring the thermosetting resin of the composite material 5 into the semi-cured state, a heating temperature is decreased or a heating time is shortened, compared to a case where the thermosetting resin is brought into a fully cured state. In addition, in the step S1, in a case where the composite material 5 and the reinforcing member 9 are integrally molded, the molding is performed so that the surface to be bonded of the composite material 5 is flush with the surface to be bonded of the reinforcing member 9 using a molding tool.

Subsequently, in the bonding method, the surfaces to be bonded of the composite materials 5 are caused to face each other, and the adhesive agent 7 is disposed between the composite materials 5 (a step S2). In the step S2, the adhesive agent 7 is disposed so as to have a uniform thickness over the surface to be bonded. In the step S2, the surface roughness of the surface to be bonded of the reinforcing member 9 may be higher than that of the surface to be bonded of the composite material 5.

Next, in the bonding method, the pair of composite materials 5 are bonded to each other to form the bonding structure 1 by putting the pair of composite materials 5 and the adhesive agent 7 bonded in the step S2 into a heating furnace 10 to heat and cure the adhesive agent 7 (a step S3). In the step S3, the thermosetting resins included in the composite materials 5 and the adhesive agent 7 are fully cured. Here, the fully cured state is a state in which the crosslinking of the thermosetting resins by heating does not proceed to a predetermined crosslinking degree or more. Specifically, in the step S3, in a case where the thermosetting resins of the composite materials 5 and the adhesive agent 7 are fully cured, the crosslinking degree of the thermosetting resin of the adhesive agent 7 is higher than that of the thermosetting resin of the composite material 5.

As described above, in the bonding method of Embodiment 1, the composite material 5 is in the semi-cured state in the step S1, and the composite materials 5 and the adhesive agent 7 are in the fully cured state in the step S3. In the step S1, the thermosetting resin of the composite material 5 is brought into the semi-cured state to remain the thermosetting resins which are unreacted for the crosslinking reaction, and in the step S3, the thermosetting resin of the composite material 5 and the thermosetting resin of the adhesive agent 7, which are unreacted for the crosslinking reaction, are subjected to the crosslinking reaction, and accordingly, it is possible to increase bonding strength between the composite material 5 and the adhesive agent 7.

In the bonding method, after the execution of the step S3, the cured bonding structure 1 is extracted from the heating furnace 10, and the series of steps is completed.

In Embodiment 1, the surface to be bonded of the reinforcing member 9 was flush with the surface to be bonded of the composite material 5, but is not limited thereto, and the surface to be bonded of the reinforcing member 9 may protrude from the surface to be bonded of the composite material 5. In addition, the reinforcing member 9 may be disposed by being laminated on the composite material 5 before curing, or a portion of the composite material 5 on which the reinforcing member 9 is disposed may be cut out and disposed, and the reinforcing member 9 is not particularly limited.

In addition, in Embodiment 1, the composite material 5 is brought into the semi-cured state in the step S1, and the composite material 5 and the adhesive agent 7 are brought into the fully cured state in the step S3, but the composite material 5 may be brought into the fully cured state in the step S1.

### [Embodiment 2]

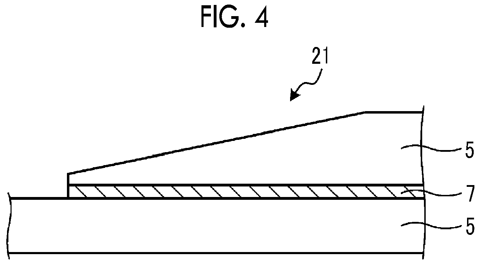

Next, Embodiment 2 will be described with reference to Fig. 4. In Embodiment 2, in order to avoid overlapping descriptions, portions different from those in Embodiment 1 will be described, and portions having the same configurations as those in Embodiment 1 will be described with them denoted by the same reference numerals. Fig. 4 is a cross-sectional view schematically showing a bonding structure according to Embodiment 2.

A bonding structure 21 of Embodiment 2 has a configuration in which the reinforcing member 9 of Embodiment 1 is omitted. In the bonding structure 21 of Embodiment 2, in the bonding method of bonding the composite materials 5 to each other using the adhesive agent 7, the composite material 5 is brought into the semi-cured state in the step S1, and the composite material 5 and the adhesive agent 7 are brought into the fully cured state in the step S3.

That is, in Embodiment 2, in the configuration in which the reinforcing member 9 is omitted, the bonding method of Embodiment 1 is performed, thereby improving the bonding strength between the composite materials 5 by the adhesive agent 7.

As described above, the bonding method and the bonding structure according to Embodiments 1 and 2 are understood as follows, for example.

In a bonding method for bonding adherends (composite materials 5) to each other through an adhesive agent 7 according to a first aspect, the adherends and the adhesive agent 7 include a thermosetting resin, the method includes a step S1 of molding the adherends, a step S2 of disposing the adhesive agent 7 between the adherends, and a step S3 of forming the bonding structure 1 by curing the adhesive agent 7 and bonding the adherends, and, in the step S1 of molding the adherends, a reinforcing member 9 having a toughness higher than a toughness of the adherends is disposed on and integrally molded with a surface of the adherends on a side on which the adhesive agent 7 is disposed.

According to this configuration, even in a case where cracks occur in the bonded portion of the adhesive agent 7, the cracks can be suppressed from progressing to the composite material 5 by the reinforcing member 9 by disposing the reinforcing member 9 having a toughness higher than that of the composite material 5. Therefore, the strength of the bonded portion of the adhesive agent 7 can be improved.

As a second aspect, in the bonding method according to the first aspect, in the step S1 of molding the adherends, the reinforcing member 9 is disposed from a predicted starting point of a crack over a critical crack length of the crack in the bonding structure 1.

According to this configuration, the cracks can be suppressed from progressing to the composite material 5 by the reinforcing member 9.

As a third aspect, in the bonding method according to the first or second aspect, in the step S1 of molding the adherends, a surface on which the reinforcing member 9 is disposed is molded to be flush with the surface of the adherends on the side on which the adhesive agent 7 is disposed.

According to this configuration, a thickness of the adhesive agent 7 can be made uniform, and therefore, the thickness of the adhesive agent 7 can be easily managed.

As a fourth aspect, in the bonding method according to any one of the first to third aspects, in the step S2 of disposing the adhesive agent, a surface roughness of a surface on which the reinforcing member 9 is disposed is higher than the surface of the adherends on the side on which the adhesive agent 7 is disposed.

According to this configuration, a bonding area of the reinforcing member 9 with respect to the adhesive agent 7 can be increased, and therefore, the bonding strength can be further increased.

As a fifth aspect, in the bonding method according to any one of the first to fourth aspects, in the step S1 of molding the adherends, the thermosetting resin included in the adherends is brought into a semi-cured state, and in the step S3 of forming the bonding structure 1, the thermosetting resin included in the adherends and the adhesive agent 7 is fully cured.

According to this configuration, in the step S1, the thermosetting resin of the composite material 5 is brought into the semi-cured state to remain the thermosetting resins which are unreacted for the crosslinking reaction, and in the step S3, the thermosetting resin of the composite material 5 and the thermosetting resin of the adhesive agent 7, which are unreacted for the crosslinking reaction, are subjected to the crosslinking reaction, and accordingly, it is possible to increase bonding strength between the composite material 5 and the adhesive agent 7.

As a sixth aspect, in the bonding method according to the fifth aspect, in the semi-cured state, a crosslinking degree of the thermosetting resin is in a range of 40% to 80%.

According to this configuration, it is possible to appropriately remain the thermosetting resin which is unreacted for the crosslinking reaction, and it is possible to easily handle the composite material 5 in the semi-cured state.

In a seventh aspect, in the bonding method according to the fifth or sixth aspect, the thermosetting resin included in the adherend has a larger molecular weight than a molecular weight of the thermosetting resin included in the adhesive agent.

According to this configuration, a rigidity of the cured composite material 5 can be increased, and a viscosity of the adhesive agent 7 during curing is decreased to increase infiltration. Therefore, the adhesive agent 7 can be allowed to spread over the bonding interface between the adherends without a gap.

As an eighth aspect, in the bonding method according to the seventh aspect, in the step S3 of forming the bonding structure 1, a crosslinking degree of the thermosetting resin included in the adhesive agent 7 is higher than a crosslinking degree of the thermosetting resin included in the adherend.

According to this configuration, even in a case where thermosetting resins having different molecular weights are used, the composite material 5 and the adhesive agent 7 can be suitably fully cured.

In a bonding method for bonding adherends to each other through an adhesive agent 7 according to a ninth aspect, the adherends and the adhesive agent 7 include a thermosetting resin, the method includes a step S1 of molding the adherends so that the thermosetting resin included in the adherends is brought into a semi-cured state, a step S2 of disposing the adhesive agent 7 between the adherends, and a step S3 of forming the bonding structure 1 by fully curing the thermosetting resin included in the adherends and the adhesive agent 7 and bonding the adherends to each other.

According to this configuration, in the step S1, the thermosetting resin of the composite material 5 is brought into the semi-cured state to remain the thermosetting resins which are unreacted for the crosslinking reaction, and in the step S3, the thermosetting resin of the composite material 5 and the thermosetting resin of the adhesive agent 7, which are unreacted for the crosslinking reaction, are subjected to the crosslinking reaction, and accordingly, it is possible to increase bonding strength between the composite material 5 and the adhesive agent 7. Therefore, the strength of the bonded portion of the adhesive agent 7 can be improved.

The bonding structure 1 according to a tenth aspect includes a pair of adherends (composite materials 5) which are provided to face each other, an adhesive agent 7 which is provided between the adherends and bonds the pair of adherends to each other, and a reinforcing member 9 which is provided on a surface of the adherends on a side on which the adhesive agent 7 is disposed, and is a material having a higher toughness than a toughness of the adherends.

According to this configuration, the cracks can be suppressed from progressing to the composite material 5 by the reinforcing member 9, and the strength of the bonded portion of the adhesive agent 7 can be improved.

### Reference Signs List

1 bonding structure
5 composite material
7 adhesive agent
9 reinforcing member
10 heating furnace
21 bonding structure

## Claims

1. A bonding method for bonding adherends to each other through an adhesive agent, in which the adherends and the adhesive agent include a thermosetting resin, the method comprising:
a step of molding the adherends;
a step of disposing the adhesive agent between the adherends; and
a step of forming a bonding structure by curing the adhesive agent and bonding the adherends to each other,
wherein, in the step of molding the adherends,
a reinforcing member having a toughness higher than a toughness of the adherends is disposed on and integrally molded with a surface of the adherends on a side on which the adhesive agent is disposed.

2. The bonding method according to claim 1,
wherein, in the step of molding the adherends,
the reinforcing member is disposed from a predicted starting point of a crack over a critical crack length of the crack in the bonding structure.

3. The bonding method according to claim 1,
wherein, in the step of molding the adherends,
a surface on which the reinforcing member is disposed is molded to be flush with the surface of the adherends on the side on which the adhesive agent is disposed.

4. The bonding method according to claim 1,
wherein, in the step of disposing the adhesive agent,
a surface roughness of a surface on which the reinforcing member is disposed is higher than the surface of the adherends on the side on which the adhesive agent is disposed.

5. The bonding method according to claim 1,
wherein, in the step of molding the adherends,
the thermosetting resin included in the adherends is brought into a semi-cured state, and
in the step of forming the bonding structure,
the thermosetting resin included in the adherends and the adhesive agent is fully cured.

6. The bonding method according to claim 5,
wherein, in the semi-cured state, a crosslinking degree of the thermosetting resin is in a range of 40% to 80%.

7. The bonding method according to claim 5,
wherein the thermosetting resin included in the adherend has a larger molecular weight than a molecular weight of the thermosetting resin included in the adhesive agent.

8. The bonding method according to claim 7,
wherein, in the step of forming the bonding structure,
a crosslinking degree of the thermosetting resin included in the adhesive agent is higher than a crosslinking degree of the thermosetting resin included in the adherend.

9. A bonding method for bonding adherends to each other through an adhesive agent, in which the adherends and the adhesive agent include a thermosetting resin, the method comprising:
a step of molding the adherends so that the thermosetting resin included in the adherends is brought into a semi-cured state;
a step of disposing the adhesive agent between the adherends; and
a step of forming a bonding structure by fully curing the thermosetting resin included in the adherends and the adhesive agent and bonding the adherends to each other.

10. A bonding structure comprising:
a pair of adherends which are provided to face each other;
an adhesive agent which is provided between the adherends and bonds the pair of adherends to each other; and
a reinforcing member which is provided on a surface of the adherends on a side on which the adhesive agent is disposed, and is a material having a higher toughness than a toughness of the adherends.
